# EUROPEAN PATENT SPECIFICATION

(11) **EP 2 886 430 B1**
(45) Date of publication and mention of the grant of the patent: **15.02.2017**
(21) Application number: 14199486.3
(22) Date of filing: 19.12.2014
(51) Int. Cl.: B62J 1/08, B62J 11/00, B62K 19/30, B62K 19/40, H01M 2/10, B62J 99/00

(54) **Support structure for a bicycle on-board device**
Trägerstruktur für eine an einem Fahrrad befestigte Vorrichtung
Structure de support destinée à un dispositif embarqué de bicyclette

(30) Priority: 23.12.2013 IT MI20132200
(43) Date of publication of application: 24.06.2015
(73) Proprietor: CAMPAGNOLO S.R.L., I-36100 Vicenza (IT)
(72) Inventor: Rosati, Stefano, I-30034 Mira (VE) (IT); Cracco, Flavio, I-36100 Vicenza (IT)
(74) Representative: Riccardi, Elisa

(56) References cited:
- EP-A1- 2 532 571
- DE-U1-202013 104 823
- FR-A1- 2 974 782
- US-A1- 2013 202 938

## Description

The present invention relates to a support structure for a bicycle on-board device, in particular a structure for removably supporting a bicycle on-board device inside a bicycle tube, in particular a seat post of a bicycle, but also the ends of the handlebars, the seat tube, the top tube, the down tube and the head tube of the bicycle.

The bicycle on-board device can be of the stand-alone type or it can be part of an on-board electronic system comprising other wired or wireless electrical, electronic and/or electromechanical devices.

Bicycle on-board electronic systems are known and are becoming increasingly sophisticated. The on-board device or the system that it is part of can for example be intended for controlling and/or managing the gearshift and/or for acquiring, processing and/or storing parameters and/or data relative to the cyclist and/or to the bicycle and/or to the trip. The on-board device or the system that it is part of can also be intended for mobile telephone communication, for multimediality and/or for anti-theft surveillance of the bicycle.

The bicycle on-board device can also merely comprise a battery power supply unit, possibly with associated power supply electronics, for other devices of the on-board electronic system, or vice-versa only one or more circuit boards without battery power supply unit.

Typically, the bicycle on-board device is located at the bottle cage fixed to the frame of the bicycle. Such a solution has the drawback of leaving the bicycle on-board device exposed to unwanted impacts, as well as to atmospheric agents. Moreover, the bicycle on-board device externally mounted to the frame of the bicycle is anti-aerodynamic, unattractive and exposed to theft.

In order to overcome the aforementioned drawbacks, the bicycle on-board device is alternatively housed inside the seat post of the bicycle.

European patent application EP 2 532 571 to the same Applicant as the present application discloses (figs. 9-11) a support structure configured to be fixed inside a seat post by means of a mechanical expander for radial pressure locking against the inner wall of the seat post, the support structure being also equipped with removable mechanical fixing means for a bicycle on-board device, in the form of a dovetail, bayonet, snap-type coupling, etc. The expander is a substantially cylindrical body having an adjustment bolt extending in the axial direction and a plurality of elements the radial extension of which is adjustable by means of the adjustment bolt. The bicycle on-board device comprises a cavity, containing a battery power supply unit and at least one circuit board inside it. There is also provided a pin-type coupling, to prevent the relative rotary movement between expander and oblong hollow body about the longitudinal axis of the bicycle on-board device.

The Applicant observes that such a support structure of a bicycle on-board device has a very complex configuration. Moreover, in order to be able to adapt the support structure to different sizes of the seat post or the seat tube in which it is inserted, which must in any case be cylindrical, it is necessary for the user to act on the adjustment bolt, so that the plurality of elements moves radially up to abut against the inner wall of the seat post or seat tube.

US 4,833,777 describes a mounting system of a battery in the seat post of a bicycle. According to such a document, the mounting system comprises a first plug mounted in the seat post and comprising a perforated elastic core and a U-shaped metallic connector, also perforated, placed on the elastic core and in contact with the inner surface of the seat post. A bolt is housed in the holes of the connector and of the elastic core, to an end of which a T-nut is connected. The metallic conductor also has a spring welded thereto, which extends upwards coming into contact with a battery. The system provides a second plug, totally similar to the previous one. In use, the first plug is placed in the seat post of a bicycle and made to expand and wedge in the seat post by turning the bolt acting on the corresponding T-nut. The battery is then placed on top of the first plug and the second plug is placed and made to expand on the battery.

The Applicant observes that in this solution, as in the previous one, the expansion of the plug, even if reversible, is controlled by the user, by means of the bolt. Moreover, the system only provides an axial hold of the battery, and not also a radial hold. Finally, such a mounting system does not lend itself well to applications in seat posts with non-circular section.

US 2012/0313407 describes a support structure for mounting a battery unit inside a seat post of a bicycle. According to such a document the support structure comprises an opening to removably receive and hold the battery unit, and one or more shoulders, suitable for engaging corresponding shoulders of the battery unit. The support structure is inserted in the seat post by snugly-fit, press-fit or gluing. A cover engages with the battery unit to keep it in position in the support structure.

The Applicant observes that such a support structure has a series of drawbacks. Firstly, it is totally rigid and therefore is not adaptable to seat posts of different shapes and sizes. Moreover, it requires that the battery unit has shoulders matching those of the support structure, for which reason it is not easily adaptable to different battery units. Furthermore, such a solution has long assembly times.

EP 1 607 321 describes a bicycle control apparatus that can be mounted in a seat post and more specifically in a seat tube that is removably mounted in the seat post. According to such a document, the seat post, at its lower end opposite the saddle, comprises a circuit mounting structure like for example an internal threading. The control apparatus comprises a tubular housing, that can be inserted in the seat post, as well as a cover at the lower end of the tubular housing. The tubular housing houses a control unit in the form of a microprocessor, and it has an internal threading at the lower end. The cover is shaped like a stepped bolt comprising: a head, equipped with a tool engaging structure and having an outer diameter that is slightly smaller than the inner diameter of the seat post; a first male threaded portion having a diameter that is slightly smaller than the diameter of the head; and a second male threaded portion having a diameter that is slightly smaller than the diameter of the first male threaded portion. The second male threaded portion is screwed into the internal threading of the tubular housing; then the first male threaded portion is screwed into the internal threading of the seat post. In an alternative embodiment, the housing is mounted in the seat post in a different manner. The first male threaded portion of the cover is replaced by a mounting structure comprising a plurality of movable projections in the form of retaining balls slidingly retained in a corresponding plurality of retaining holes and biased radially outwardly by a corresponding plurality of springs. The mounting structure also includes a plurality of stationary projections in the form of rectangular male splines. In the seat post, the circuit mounting structure comprises, instead of the female threading, a plurality of recesses in the form of hemispherical grooves and a plurality of recesses in the form of female splines.

The Applicant observes that such a control apparatus has a series of drawbacks. Indeed, such an apparatus needs the seat post to have a cylindrical tubular shape, and thus it does not lend itself to mount in seat posts with a non-circular cross section; moreover, such an apparatus requires a substantial alteration of the seat post to make the circuit mounting structure, which *Inter alia* adapts poorly to seat posts made of a composite material such as carbon fibre.

Patent document GB 2 260 009 describes an electronic bicycle alarm housed in a frame element or in a seat post of a bicycle. The electronic alarm comprises spring stop elements, which firmly grip the inside of the frame element or the seat post in order to keep the alarm in position, a sound receiver fixed outside the frame element or the seat post and activation/deactivation means.

The Applicant observes that the spring stop elements, although they allow the electronic alarm to be kept in position inside the frame element or the seat post, do not lend themselves to the assembly of the alarm in frames or seat posts with non-circular section. Moreover, the spring stop elements are directly formed on the casing of the alarm, resulting in a support structure that is not particularly versatile.

Document US 2013/0202938 describes a bicycle electric power source assembly comprising a tubular member, an electric power source member arranged in the tubular member and a restricting member arranged in a through hole of the tubular member. The restricting member includes a restricting part suitable for engaging with a receiving seat of the electrical power source member to restrict relative movement of the electrical power source member with respect to the tubular member in the axial direction of the tubular member. The electric power source assembly also comprises a positioning member, made of rubber or another elastic material, arranged in a gap formed between the electric power source member and the inner surface of the tubular member, to position the electric power source member with respect to a radial direction of the tubular member while the electric power source member is disposed within the tubular member. It is also mentioned that the constraining member can be made of rubber or another elastic material.

The Applicant observes that the positioning member made of rubber or another elastic material allows the electric power source member to be positioned in the radial direction of the tubular member, but it does not have the purpose of supporting the electric power source member in the tubular member and is not well suited to the mounting of the electric power source member in a tubular member having a section other than circular.

DE 20 2013 104823 U1, which is considered the closest prior art to the subject-matter of claims 1 and 5, discloses a bicycle cable configured to be inserted into tubes of a bicycle frame. The cable comprises an external cover made of a foamed resin and a plurality of fins circumferentially arranged on an outer surface of the external cover.

The invention, in accordance with claims 1 and 5, addresses the problem of avoiding the aforementioned drawbacks with reference to the prior art, in particular providing a simplified support structure of a bicycle on-board device inside a bicycle tube, capable of adequately preventing a displacement of the bicycle on-board device when in mounted position in the bicycle tube, and at the same time of allowing the bicycle on-board device to be mounted in bicycle tubes of different shapes and/or sizes.

More specifically, in a first aspect thereof the invention relates to a support structure of a bicycle on-board device inside a bicycle tube, in particular a seat post, the support structure comprising means for support the bicycle on-board device, and a portion configured to be inserted inside the bicycle tube, characterised in that the portion configured to be inserted inside the bicycle tube has a stiffness with respect to radial deformation that is not constant for all of the angular positions and/or for all of the longitudinal positions.

Hereinafter in the present description and in the attached claims, reference will be made for the sake of brevity to stiffness, meaning stiffness with respect to radial deformation.

Hereinafter in the present description and in the attached claims, the terms radial, angular and axial or longitudinal are used with reference to a cylindrical reference system, and therefore do not imply that the portion configured to be inserted inside the bicycle tube is substantially cylindrical

Therefore, the stiffness with respect to radial deformation takes on at least two different values in two different angular positions and/or in two different longitudinal positions of the portion configured to be inserted inside the bicycle tube.

Thanks to the provision of a non-constant stiffness of the portion configured to be inserted inside the bicycle tube it is possible to assign a less rigid region thereof to give the adaptability to the shape and/or size of the bicycle tube and a more rigid region thereof to give an adequate hold on the inner surface of the bicycle tube.

Such a configuration of the support structure makes it possible, advantageously, to prevent a movement in the axial direction and in the radial direction of the support structure in the bicycle tube and consequently of the bicycle on-board device when in mounted position, and at the same time to allow the bicycle on-board device to be mounted in bicycle tubes of different shapes and/or sizes.

Preferably, the stiffness with respect to radial deformation takes up a maximum value and a minimum value, respectively, in two opposite angular positions of the portion configured to be inserted inside the bicycle tube.

In certain embodiments, the portion configured to be inserted inside the bicycle tube has a comparatively rigid slice and a comparatively elastically deformable slice.

Hereinafter in the present description, and in the attached claims, under "slice" it is meant each of the parts in which the portion configured to be inserted inside the bicycle tube is divided by two half-planes that contain the axis of the cylindrical reference system.

Hereinafter in the present description, and in the attached claims, under "rigid" and "substantially rigid" and the like, the property of a body to not be easily deformed, to withstand the action of forces tending to deform it is meant.

Hereinafter in the present description, and in the attached claims, under "elastically deformable" and the like, the property of a body to undergo, under the action of given stresses, deformations that disappear, more or less completely, once the stresses cease is meant.

The terms "comparatively" are used to oppose the terms "rigid" and "elastically deformable" to one another.

Preferably, the comparatively rigid slice and the comparatively elastically deformable slice are explementary.

The substantially rigid slice comprises a radially outer surface, which abuts, in use, against an inner surface of the bicycle tube, and a radially inner surface, against which, in use, the bicycle on-board device or a pin abuts, the pin having, at one end, mechanical fixing means, preferably removable, for the bicycle on-board device.

In embodiments the substantially rigid slice comprises a longitudinal cavity.

In embodiments, the comparatively elastically deformable slice is made of an undulating surface forming lobes or "petals" spaced by grooves.

Preferably, the elastically deformable slice comprises a continuous or discontinuous radially outer wall, a continuous or discontinuous radially inner wall and connection elements therebetween. In this way, a "grid" structure is obtained suitable for giving a suitable elastic deformability.

When the radially outer wall and the radially inner wall are discontinuous, the elastically deformable slice comprises a plurality of radially outer portions, a plurality of radially inner portions, and connection elements between adjacent pairs of such radially outer and inner portions.

Between successive radially outer portions, grooves are thus defined, each being delimited by a radially inner portion and by a pair of connection elements.

Preferably, the connection elements have an increasing radial extension moving away in the two directions from the substantially rigid slice, to converge in a position opposite thereto. This provision makes it possible to have a region of maximum elastic deformability opposite the region of maximum stiffness, with consequent optimal balancing of the forces involved.

Preferably the connection elements are spaced apart so as to form radially outer wall portions, or cavities between the radially outer continuous wall and the radially inner continuous wall, that have increasing angular extension moving away in the two directions from the substantially rigid segment, to converge in a position opposite thereto. This provision also makes it possible to have a region of maximum elastic deformability opposite the region of maximum stiffness, with consequent optimal balancing of the forces involved.

In other embodiments, the portion configured to be inserted inside the bicycle tube has a substantially annular body and at least one strip extending longitudinally from said annular body. The annular body forms a comparatively rigid region of the support structure, while the strip or strips and in particular its/their regions most spaced from the annular body form(s) a comparatively elastically deformable region of the support structure.

Preferably, said at least one strip or at least one of said strips has at least one portion projecting radially outwards. Said portions, in use, are in abutment and thrusting relationship with the inner wall of the bicycle tube.

Preferably, said at least one strip or at least one of said strips has at least two portions projecting radially outwards and at least one radially inner joining portion between two adjacent radially outer portions.

Preferably, each strip carries at least one highly yielding element, typically a rubber pad or any other known component having a damping function, more preferably at least at said portions projecting radially outwards.

Preferably, the substantially annular body has a slit.

Preferably, a flap extends radially from the substantially annular body. The flap has an anti-rotation function of the support structure inside the bicycle tube.

Preferably, the substantially annular body and the flap are made as one piece, in other words the flap extends from an end of a slit of the substantially annular body.

Preferably, the portion configured to be inserted inside the bicycle tube has a layer of adhesive material on a surface suitable for abutting, in use, against an inner surface of the bicycle tube and/or at a surface defining a seat suitable for receiving, in use, the bicycle on-board device..

Alternatively or in addition to the adhesive material, preferably the portion configured to be inserted inside the bicycle tube has a surface suitable for abutting, in use, against an inner surface of the bicycle tube and/or a surface defining a seat suitable for receiving, in use, the bicycle on-board device that is corrugated, knurled, grooved, or textured in another way, to increase the grip on the inner surface of the bicycle tube and/or to increase the grip on the bicycle on-board device.

In embodiments, said means for supporting the bicycle on-board device comprise a seat formed in the portion configured to be inserted inside the bicycle tube.

Preferably, said seat is cylindrical, without projections or recesses or abutment surfaces, so as to couple with any bicycle on-board device, without requiring particular matching means on the bicycle on-board device.

In other embodiments, the support structure comprises a pin having, at a first longitudinal end, said means for supporting the bicycle on-board device, the pin extending longitudinally in a seat formed in the elastically deformable portion.

Alternatively or in addition to the secondary features indicated above, the support structure of this first aspect of the invention preferably has one or more of the features outlined below with reference to a second aspect of the invention.

The invention also addresses the technical problem of avoiding the drawbacks mentioned above with reference to the prior art, in particular providing a support structure of a bicycle on-board device inside a bicycle tube, in particular a seat post, which allows a quick assembly in the bicycle tube or seat post, while still keeping a good adaptability to bicycle tubes or seat posts of different shapes and/or sizes.

The invention relates to a support structure of a bicycle on-board device inside a bicycle tube, in particular a seat post, configured to be fixed inside the bicycle tube and provided with mechanical fixing means for the bicycle on-board device, characterised by comprising an elastically deformable portion, configured to be at least partially inserted in a forced manner inside the bicycle tube, in which said mechanical fixing means for the bicycle on-board device are formed at a first longitudinal end of a pin extending longitudinally in the elastically deformable portion.

The elastically deformable portion of the support structure of the invention, configured to be at least partially inserted in a forced manner inside the bicycle tube, allows the support structure to be mounted by simply forcing it inside the bicycle tube without requiring adjustment by the user of a mechanically expandable portion, which would be slow and would in principle require the use of a specific tool; once forced inside the bicycle tube, the elastically deformable portion, through its elastic return, grips and fastens onto the bicycle tube itself. Since the grip on the bicycle tube is assigned to the elastic return of the elastically deformable portion, the bicycle tube is advantageously prevented from being subject to be damaged by an excessive expansion, as could occur in the case of a mechanically expandable portion.

The support structure of the invention also has the substantial advantage that the elastically deformable portion is able to dampen the vibrations that occur while riding the bicycle and that could damage any electronic components of the bicycle on-board device.

By providing the pin, the weight of the bicycle on-board device - in particular when the support structure is used to mount the bicycle on-board device suspended at the seat post - that is discharged onto the pin through the mechanical fixing means, is further discharged over the entire surface of the elastically deformable portion coupled with the pin, so that the elastically deformable portion is more uniformly stressed.

Preferably, the mechanical fixing means for the bicycle on-board device are removable mechanical fixing means.

Preferably, the pin extends longitudinally for the entire longitudinal extension of the elastically deformable portion.

The pin and the elastically deformable portion can be co-moulded, coextruded, glued, screwed together, riveted, forcedly coupled, Velcro^{®} fastened or constrained to each other in other ways.

Preferably, the pin is hollow for most of its length, so as to limit the weight of the support structure.

Preferably, the pin comprises, at a second longitudinal end opposite the first longitudinal end, a head that, in a mounted configuration of the support structure, is in abutment on a longitudinal end of the elastically deformable portion.

Preferably, the head is formed on an externally threaded screw in screwing engagement with an internal threading of the pin.

Preferably, the support structure further comprises a washer arranged between the screw and the elastically deformable portion.

Preferably, the washer has an internal diameter greater than the external diameter of the pin so as to block the elastically deformable portion. In this way, when the screw is tightened in the pin, the washer exerts a pressure in the longitudinal direction on the elastically deformable portion, thus causing a radial deformation of the elastically deformable portion and therefore a better grip on the bicycle tube.

Preferably, the pin comprises, at the first longitudinal end, a bottom provided with a hole for the passage of a screw intended for screwing into a threaded hole of the bicycle on-board device.

Preferably, the pin and the elastically deformable portion are not coaxial. In this way, on a casing of the bicycle on-board device, possible fixing means matching those of the support structure, for example a threaded hole, can be off-centred and thus leave more space for a cavity of the on-board device for housing the respective components. Moreover, even when the bicycle tube has an internal size slightly greater than the external size of the pin, at least one region of the elastically deformable portion has a sufficient thickness to allow it to be shaped in the desired manner also by extrusion in plastic material.

Preferably, the removable mechanical fixing means for the bicycle on-board device comprise a threaded portion. Alternatively, the removable mechanical fixing means for the bicycle on-board device can be of the press-, snap-, slipping-, bayonet or Velcro^{®} type.

Preferably, the support structure further comprises an anti-rotation device for the bicycle on-board device. In this way, the position of the bicycle on-board device remains the intended one, and it is possible to facilitate the insertion of the support structure - bicycle on-board device assembly in the bicycle tube.

Preferably, the anti-rotation device comprises a peg projecting at the first end of the pin, configured to be housed in a seat of the bicycle on-board device.

Alternatively or in addition to the secondary features indicated above, the support structure of this second aspect of the invention preferably has one or more of the features outlined above with reference to the first aspect of the invention.

In particular, preferably the elastically deformable portion has a stiffness with respect to radial deformation that is not constant for all of the angular positions and/or for all of the longitudinal positions.

More preferably, the elastically deformable portion has a comparatively rigid slice and a comparatively elastically deformable slice.

Further features and advantages of the present invention will become clearer from the following detailed description of some preferred embodiments thereof, made with reference to the attached drawings. The different features in the individual configurations can be combined together as desired. In such drawings:
- Figure 1 schematically illustrates a bicycle having an on-board device mounted through a support structure of the invention;
- Figure 2 is a perspective view of a seat post of the bicycle of Figure 1, with an on-board device mounted inside it by means of a support structure according to an embodiment of the invention;
- Figure 3 is a perspective view of a bicycle tube, with an on-board device mounted inside it by means of the support structure of Figure 2;
- Figure 4 is a view similar to that of Figure 3, with the on-board device, and the relative support structure, extracted from the seat post;
- Figure 5 is a cross-sectional view through the seat post of Figure 3;
- Figure 6 is a perspective view of a support structure according to another embodiment of the invention;
- Figure 7 is a perspective view of a bicycle tube, with an on-board device mounted inside it by means of the support structure of Figure 6;
- Figure 8 is a front view of the support structure of Figure 6 mounted in a bicycle tube;
- Figure 9 is a perspective view, which shows a support structure for a bicycle on-board device according to another embodiment of the invention, in the non-mounted configuration, together with a bicycle tube and a bicycle on-board device;
- Figure 10 schematically shows the support structure of Figure 9 in mounted position in a seat post, together with a bicycle on-board device;
- Figure 11 is an exploded longitudinal section view of the support structure for a bicycle on-board device of Figure 9, together with a bicycle on-board device partially cut away;
- Figure 12 is a longitudinal section view of the support structure for a bicycle on-board device of Figure 9, together with a bicycle on-board device partially cut away, in the mounting condition;
- Figure 13 is a perspective view of the bicycle on-board device - support structure assembly of Figure 9 in mounted position in a seat post with non-circular cross section;
- Figure 14 shows the support structure of Figure 13 in mounted position in a seat post, together with a bicycle on-board device;
- Figure 15 is a longitudinal section view taken along the line XV-XV of Figure 14, with a bicycle on-board device partially cut away;
- Figure 16 shows another embodiment of a support structure for a bicycle on-board device of the invention, in mounted position inside a seat post with circular section;
- Figure 17 shows another embodiment of a support structure for a bicycle on-board device of the invention, in mounted position inside a seat post with non-circular section;
- Figure 18 shows another embodiment of a support structure for a bicycle on-board device of the invention, in mounted position inside a seat post with circular section;
- Figure 19 shows a perspective view of another embodiment of a support structure for a bicycle on-board device of the invention;
- Figure 20 shows the support structure of Figure 19 mounted on a bicycle on-board device;
- Figure 21 is a perspective view of a bicycle tube, with an on-board device mounted inside it by means of the support structure of Figure 19;
- Figure 22 is a perspective view of another embodiment of a support structure for a bicycle on-board device of the invention;
- Figure 23 is a perspective view, which shows the support structure of Figure 22 mounted on a bicycle on-board device;
- Figure 24 is a plan view of a bicycle tube, with an on-board device mounted inside it by means of the support structure of Figure 22;
- Figure 25 shows a cross-sectional view of another embodiment of a support structure for a bicycle on-board device of the invention, in mounted position inside a seat post;
- Figure 26 is a longitudinal section view taken along the line XXVI-XXVI of Figure 25, with the bicycle tube partially cut away;
- Figure 27 is an exploded perspective view, which shows a support structure for a bicycle on-board device according to another embodiment of the invention, together with a bicycle on-board device;
- Figure 28 schematically shows the support structure of Figure 27 in mounted position in a seat post, together with a bicycle on-board device; and
- Figure 29 is a partial longitudinal section view taken along the line XXIX-XXIX of Figure 28.

In the following description, to illustrate the figures, identical or similar reference numerals - in particular, increased each time by 100 - are used to indicate constructive elements with the same or an analogous function.

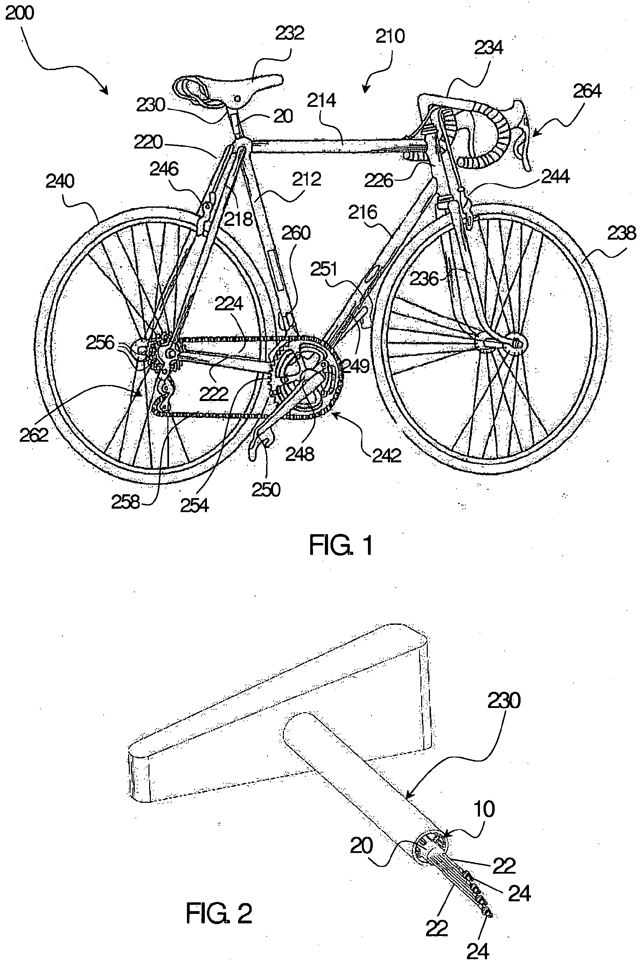

Figure 1 schematically illustrates an exemplary bicycle 200; having an on-board device 20 mounted in one of the positions allowed by a support structure according to the invention.

In a *per se* known way, the bicycle 200 comprises a frame 210, a seat post 230 at least partially inserted in the upper end of a seat tube 212 of the frame 210 and equipped with a saddle 232 at its upper end, handlebars 234, a fork 236 rotatably mounted in a head tube 226, a front wheel 238 rotatably supported at the lower end of the fork 236, a rear wheel 240 rotatably supported at the rear part of the frame 210, a propulsion mechanism 242 and at least one of a front brake 244 and a rear brake 246.

The frame 210 in the embodiment shown is of the diamond type, comprising the aforementioned seat tube 212, the aforementioned head tube 226, a top tube 214, a down tube 216, and four additional rear stays 218, 220, 222, 224. The rear stays 218, 220, 222, 224 more specifically comprise the down tube 216, a pair of seat tubes 218, 220 that extend obliquely downwards and backwards from the point in which the seat tube 212 and the top tube 214 meet and the seat post 230 is mounted, and a pair of tubes 222, 224 that extend substantially horizontally backwards from the point in which the seat tube 212 and the down tube 216 meet, one of which 222 is also called sleeve in the field.

Typically, the propulsion mechanism 242 comprises a pair of crank arms 248, 249 equipped with pedals 250, 251 to drive a shaft of the bottom bracket assembly (not shown) into rotation, and on which at least one front sprocket 254 is fitted; at least one rear toothed wheel. 256 at the rear wheel 240 and a chain 258 extending each time between a front toothed wheel 254 and a rear toothed wheel 256. In the case of a propulsion mechanism 242 with variable transmission ratio, there is also a front derailleur 260 to move the chain 258 among the front toothed wheels 254 and/or a rear derailleur 262 to move the chain 258 among the rear toothed wheels 256.

Devices 264 for controlling the brakes 244, 246 and/or the derailleurs 260, 262 are typically arranged at the ends of the handlebars 234 as shown, or they are fixed in a convenient position on the frame 210. Such devices can comprise levers and/or buttons to generate electrical actuation commands of the brakes 244, 246 and/or of the derailleurs 260, 262, or to actuate them mechanically, like for example through a Bowden cable.

An on-board electronic system mounted on the bicycle 200 comprises one or more of the following devices or components (many of which are not shown): the aforementioned control devices 264, an electric motor for moving each derailleur 260, 262, a position sensor of each derailleur 260, 262, a speed sensor, a pedalling cadence sensor, an inclinometer, a speedometer, a heart rate monitor or other sensors, a display unit, an audio unit, as well as at least one battery power supply unit preferably of the rechargeable type, one or more processors, and memory means for the operation of such devices and/or for collecting and storing data. There can also be a reader of multimedia content such as music, video, images, including geographical map files, a digital camera, a video camera, a voice recording unit, a mobile telephone unit and/or other applications.

The various components described above are wired and/or wireless connected to each other, and they can be positioned in various places of the bicycle.

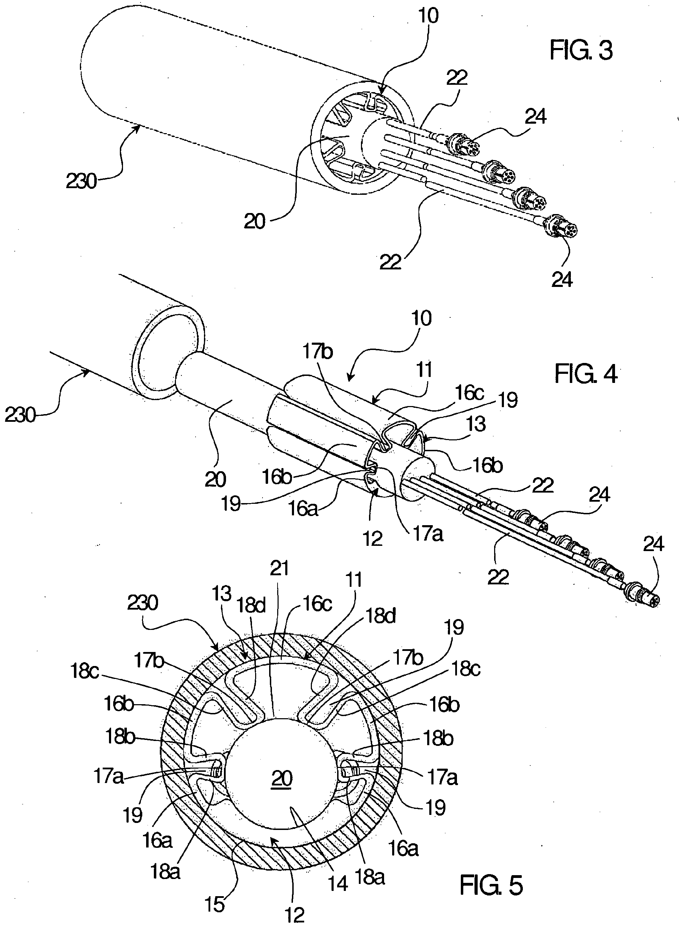

A support structure 10 for a bicycle on-board device 20, which can form or be a component of such an on-board electronic system, according to a first embodiment of the invention is shown schematically, in its mounting condition of the bicycle on-board device 20 at the seat post 230 in Figure 2 and in detail in Figures 3 to 5. The bicycle on-board device 20 can for example comprise a battery power supply unit and/or electronics and cables 22 provided with connectors 24 for connection within the on-board electronic system.

Although hereinafter for the sake of brevity reference will be made to the seat post 230, the support structure of the invention - of the present and of the other embodiments - could also be used for mounting the bicycle on-board device 20 at another bicycle tube, for example at an end of the handlebars 234, in particular in the case of straight handlebars (not shown), or at the seat tube 212, at the top tube 214, at the down tube 216, at the head tube 226.

With reference to Figures 2 to 5, the support structure 10 comprises a portion 11 configured to be inserted inside the seat post 230.

Such a portion 11 is elastically deformable.

As described more clearly hereinafter, the elastically deformable portion 11 is configured to be at least partially inserted in a forced manner inside the seat post 230.

In particular, the elastically deformable portion 11 comprises a comparatively rigid slice 12 and a comparatively elastically deformable slice 13, hereinafter also indicated as substantially rigid slice 12 and elastically deformable slice 13.

The substantially rigid slice 12 has a curved shape and comprises a radially inner surface 14 and a radially outer surface 15.

The elastically deformable slice 13 is made of an undulating surface forming lobes or "petals" spaced apart by grooves.

More specifically, the elastically deformable slice 13 comprises a plurality of radially outer portions 16a, 16b, 16c, a plurality of radially inner portions 17a, 17b and connection elements 18a, 18b, 18c, 18d between adjacent pairs of such radially outer portions 16a, 16b, 16c and inner portions 17a, 17b. Between successive radially outer portions 16a, 16b, 16c grooves 19 are thus defined, each delimited by a radially inner portion 17a, 17b and by a pair of connection elements 18a, 18b, 18c, 18d. The radially outer portions 16a, 16b, 16c overall define a discontinuous radially outer wall and the radially inner portions 17a, 17b overall define a discontinuous radially inner wall.

In particular, and as shown in detail in Figure 5, the elastically deformable slice 13 preferably comprises a first pair of radially outer portions 16a, extending from opposite ends of the radially outer surface 15 of the substantially rigid slice 12; a first pair of radially inner portions 17a, each connected to a respective radially outer portion 16a of the first pair of radially outer portions by a connection element 18a; a second pair of radially outer portions 16b, each connected to a respective radially inner portion 17a of the first pair of radially inner portions by a connection element 18b; a second pair of radially inner portions 17b, each connected to a respective radially outer portion 16b of the second pair of radially outer portions by a connection element 18c; and a third radially outer portion 16c connected to each radially inner portion 17b of the second pair of radially inner portions by a respective connection element 18d.

Preferably, the radially outer portions 16a, 16b, 16c have increasing angular extension moving away in the two directions from the substantially rigid slice 12 of the elastically deformable portion 11 of the support structure 10, to converge in a position opposite thereto. More specifically, each portion of the second pair 16b of radially outer portions has an angular extension greater than that of each portion of the first pair 16a of radially outer portions and the third radially outer portion 16c has an angular extension greater than that of each portion of the second pair 16b of radially outer portions.

Moreover, preferably the connection elements 18a, 18b, 18c, 18d between the radially outer portions 16a, 16b, 16c and inner portions 17a, 17b have increasing radial extension moving away in the two directions from the substantially rigid slice 12 of the elastically deformable portion 11 of the support structure 10, to converge in a position opposite thereto.

More specifically, the connection elements 18b between the second radially outer portions 16b and the first radially inner portions 17a have a radial extension greater than that of the connection elements 18a between the first radially outer portions 16a and the first radially inner portions 17a; the connection elements 18c between the second radially inner portions 17b and the second radially outer portions 16b have a radial extension greater than that of the connection elements 18b between the second radially outer portions 16b and the first radially inner portions 17a; and the connection elements 18d between the third radially outer portion 16c and the respective second radially inner portions 17b have a radial extension greater than that of the connection elements 18c between the second radially inner portions 17b and the second radially outer portions 16b.

The radially inner portions 17a, 17b and the radially outer portions 16a, 16b, 16c can differ in number from what is shown.

Although the support structure 10 has been shown and described as having a plane of symmetry, this is not strictly necessary.

Moreover, although it is illustrated and described that there are an odd number of radially outer portions 16a, 16b, 16c and an even number of radially inner portions 17a, 17b, so that a radially outer portion 16c is provided in a position opposite the substantially rigid slice 12, the elastically deformable portion 11 of the support structure 10 could have an even number of radially outer portions and an odd number of radially inner portions, so that a radially inner portion - in other words a groove - would be provided in a position opposite the substantially rigid slice 12. Moreover, it is noted that the configuration shown is advantageous since it opposes the region of maximum elastic deformability to the region of maximum stiffness.

Furthermore, although it has been illustrated and described that the substantially rigid slice 12 has radially outer portions 16a adjacent thereto, this is not strictly necessary and instead there could be radially inner portions, in this case extending from opposite ends of the radially inner surface 14 of the substantially rigid slice 12. Moreover, it is noted that the configuration shown is advantageous in that it increases the angular extension of the contact surface between the support structure 10 and the inner surface of the seat post 230 close to the substantially rigid slice 12, namely the region of maximum stiffness. This makes the support structure 10 more stable in position within the seat post 230.

The radially inner surface 14 of the substantially rigid slice 12 and the radially inner portions 17a, 17b of the elastically deformable slice 13 define a seat 21 suitable for receiving, in use, the bicycle on-board device 20.

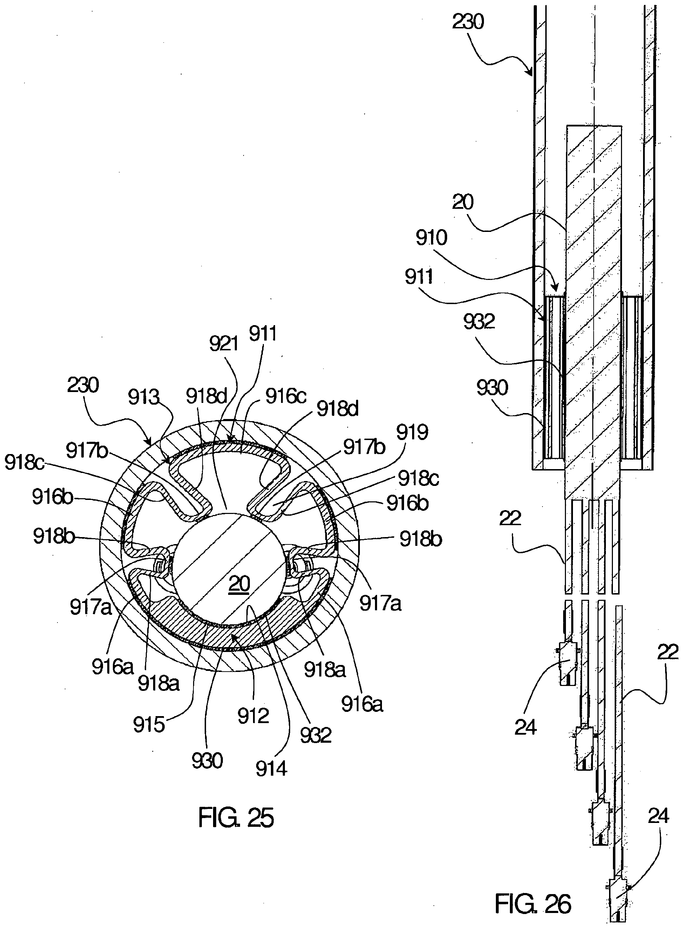

The bicycle on-board device 20 is in particular removably fixed in the seat 21, but it could also be permanently fixed (compare Figure 25).

The radially outer surface 15 of the substantially rigid slice 12 and the radially outer portions 16a, 16b, 16c of the elastically deformable slice 13 form a surface suitable for abutting, in use, against an inner surface of the seat post 230.

The elastically deformable portion 11, which in this case forms the entire support structure 10, is in the form of a structure with differentiated or non-constant stiffness for all of the angular positions, wherein the elastically deformable slice 13 allows the support structure 10 to adapt, in use, to seat posts 230 of variable shapes and/or sizes, while the substantially rigid slice 12, in use, provides an adequate grip on the inner surface of the bicycle tube, as well as a position for the bicycle on-board device 20 that is definite and stable even in the presence of vibrations, which it damps.

Preferably, the substantially rigid slice 12 has an angular extension comprised between 40° and 80°, more preferably equal to about 60°.

Preferably, the substantially rigid slice 12 has a thickness greater than the elastically deformable slice 13.

Moreover, although the wall thickness of the radially inner portions 17a, 17b, of the radially outer portions 16a, 16b, 16c and of the connection elements 18a, 18b, 18c, 18d is shown as constant, this is not strictly necessary. Preferably, in the case of non-constant thickness, the thickness will decrease moving away in the two directions from the substantially rigid slice 12 of the elastically deformable portion 11 of the support structure 10, to converge in a position opposite thereto.

The elastically deformable portion 11 of the support structure 10 is made of plastic material, metal or similar materials capable of providing the support structure 10 with the elastic deformability. In particular it can be made by extrusion.

Preferably, the radially outer portions 16a, 16b, 16c of the elastically deformable slice 13 are externally corrugated, knurled, grooved or textured in another way, and this is in order to increase the grip between the support structure 10 and the seat post 230, and thus to keep the bicycle on-board device 20 firmly in position in the seat post 230. As an alternative or in addition, a textured surface, suitable for performing the same function, can be provided at the radially outer surface 15 of the substantially rigid slice 12.

As an alternative and/or in addition, the radially inner surfaces of the radially inner portions 17a, 17b of the elastically deformable slice 13 and/or the radially inner surface 14 of the substantially rigid slice 12 can be textured, so as to increase the grip between the support structure 10 and the bicycle on-board device 20.

In order to mount the bicycle on-board device 20 inside the seat post 230, the user has to firstly at least partially insert the bicycle on-board device 20 in a forced manner into the seat 21 of the support structure 10 defined by the radially inner surface 14 of the substantially rigid slice 12 and by the radially inner portions 17a, 17b of the elastically deformable slice 13. Upon insertion, the bicycle on-board device 20 is in abutment against the radially inner surface 14 of the substantially rigid slice 12 and gripped by the radially inner portions 17a, 17b of the elastically deformable slice 13, due to the elastic return of the elastically deformable slice 13.

The support structure 10 - bicycle on-board device 20 assembly is then also at least partially inserted in a forced manner inside the seat post 230. Upon insertion, the radially outer surface 15 of the substantially rigid slice 12 of the support structure 10 and the radially outer portions 16a, 16b, 16c of the elastically deformable slice 13 of the support structure 10 are in abutment and push against the inner surface of the seat post 230, due to the elastic return of the elastically deformable slice 13.

The mounting could in any case take place by first inserting only the support structure 10 in the seat post 230 and then inserting the on-board device 20 in the support structure 10.

Also in the case in which forced insertion of the bicycle on-board device 20 in the support structure 10 or vice-versa forced insertion of the support structure 10 in the seat post 230 is not provided, rather only one of the two insertions is forced, when mounting is complete the bicycle on-board device 20 will in any case be clasped, and the support structure 10 will in any case grip and push onto the inner surface of the seat post 230, due to the elastic return of the elastically deformable slice 13.

The elastically deformable slice 13 of the support structure 10 of the invention thus advantageously allows the bicycle on-board device 20 to be mounted by simply forcing it inside the support structure 10, thereby allowing bicycle on-board devices of different shapes and/or sizes to be mounted.

Furthermore, the elastically deformable slice 13 advantageously allows the support structure 10 to be mounted inside the seat post 230 without requiring adjustment by the user of a mechanically expandable portion, which would be slow and would generally require a specific tool.

Moreover, since the grip on the seat post 230 is performed by the elastic return of the elastically deformable slice 13, it is advantageously avoided that the seat post 230 can be damaged by excessive expansion, as could occur in the case of a mechanically expandable portion.

Furthermore, the support structure 10 of the invention has the substantial advantage that the elastically deformable portion 11 is able to dampen the vibrations that occur while riding the bicycle and that could damage any electronic components of the bicycle on-board device 20.

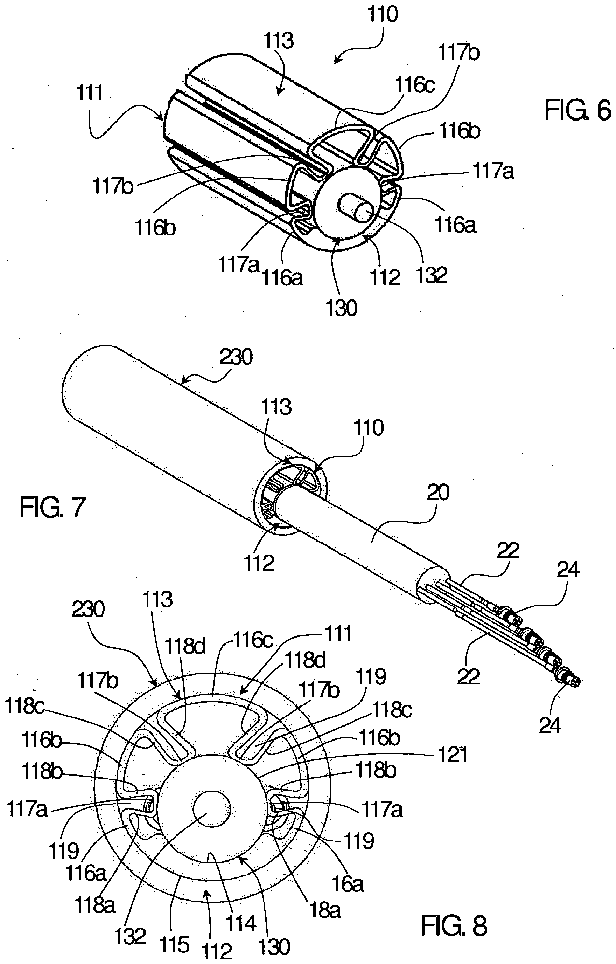

Figures 6 to 8 show a support structure 110 of a bicycle on-board device 20 according to another embodiment, which comprises an elastically deformable portion 111 configured to be at least partially inserted in a forced manner in the seat post 230 that is the same as the embodiment illustrated and described above.

The embodiment of Figures 6 to 8 differs from the one illustrated and described above in that it comprises a pin 130, extending longitudinally in the portion 111, at a longitudinal end of which fixing means for the bicycle on-board device 20 are formed.

Preferably, the pin 130 extends for the entire longitudinal extension of the portion 111 as shown.

The fixing means of the bicycle on-board device 20 preferably consist of a threaded end 132 of the pin, thus forming removable mechanical fixing means.

Alternatively, the end 132 of the pin 130 can be configured to couple, for example by press-fit, slipping-fit, bayonet-fit, snap-fit or similar removable mechanical coupling systems, with matching fixing means formed in the bicycle on-board device 20, for example a threaded hole.

Furthermore, the end 132 of the pin 130 can be configured to be inserted and glued in a hole of the bicycle on-board device 20, thus forming permanent fixing means.

In particular, and as shown in greater detail in Figure 8, the pin 130 is housed in a seat 121 defined by the radially inner surface 114 of the substantially rigid slice 112 and by the radially inner portions 117a, 117b of the elastically deformable slice 113 of the portion 111 of the support structure 110.

Therefore, the pin 130 and the portion 111 are not coaxial.

The pin 130 can be formed as one piece with the portion 111, for example by co-extrusion or co-moulding, or can form a separate element, which is coupled with the portion 111 by press-fit, screwing, gluing, riveting, forced coupling, Velcro^{®} fastening or in other equivalent ways.

The pin 130 can be made, for example, of plastic material or metal, for example aluminium and similar metals.

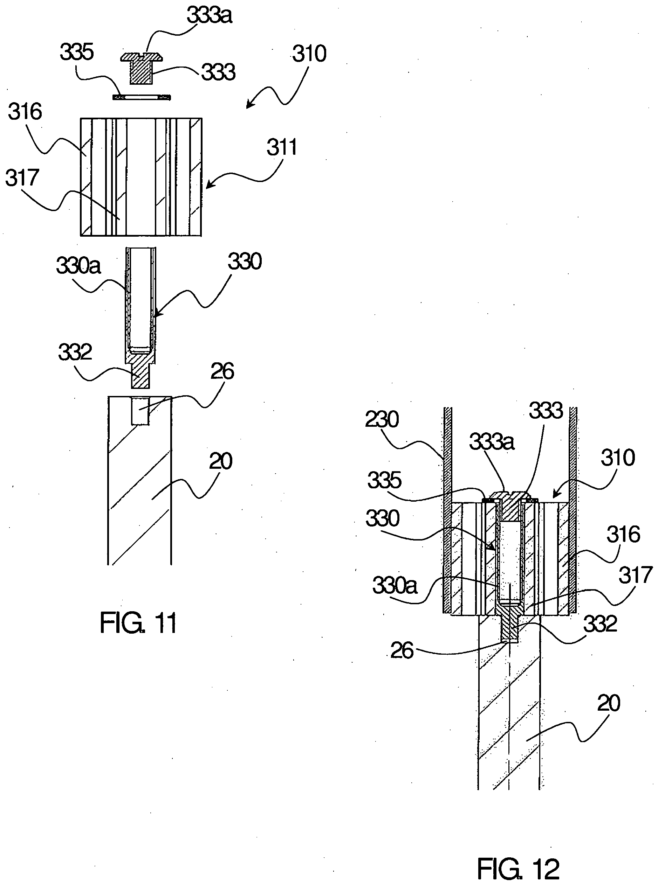

Preferably, the pin 130 is hollow (compare Figures 11, 15, 29) for most of its length, in particular for the length extending in the portion 111, so as to limit the weight of the support structure 110.

In order to mount the bicycle on-board device 20 in the seat post tube 230, after having coupled the pin 130 with the portion 111 if necessary, the support structure 110 is inserted in the seat post 230, and then the threaded end 132 of the pin 130 is screwed into the bicycle on-board device 20. Alternatively, the mounting steps can be carried out in another order.

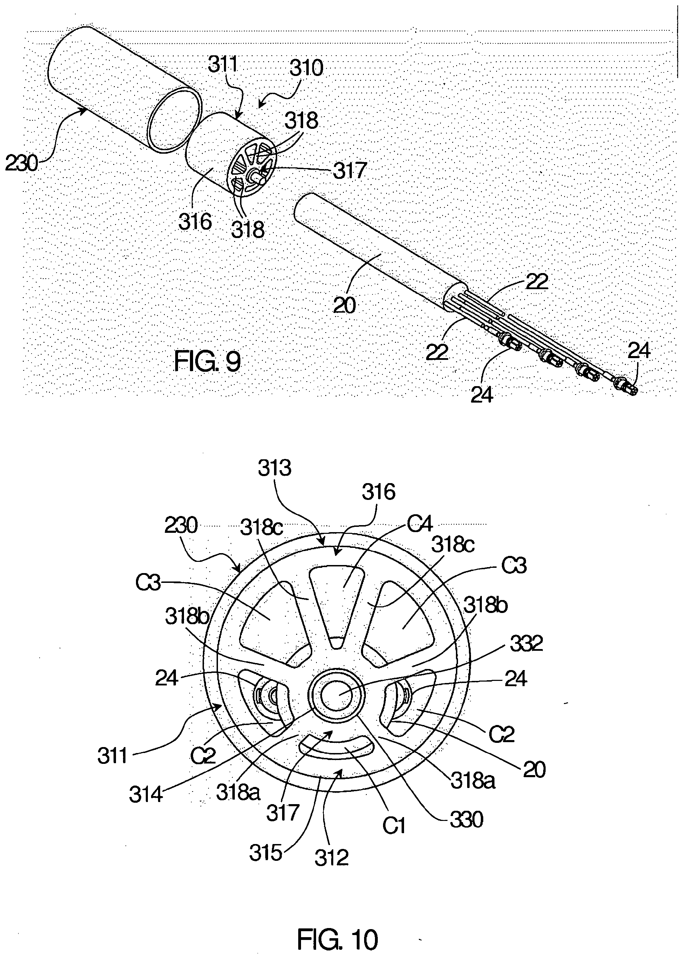

Figures 9 to 12 show a support structure 310 for a bicycle on-board device 20 according to another embodiment of the invention. The support structure 310 differs from the ones illustrated and described above mainly in that there are no grooves 19 therein.

The support structure 310 also comprises an elastically deformable portion 311 configured to be at least partially inserted in a forced manner in the seat post 230.

In particular, the portion 311 of the support structure 310 comprises an outer hollow cylindrical body 316 - which embodies a continuous radially outer wall -, an inner hollow cylindrical body 317 - which embodies a continuous radially inner wall -, preferably offset with respect to the outer hollow cylindrical body 316, and a plurality of connection elements 318a, 318b, 318c between the outer and inner hollow cylindrical bodies 316, 317, indicated in general with 318 in Figure 9.

As shown in greater detail in Figure 10, due to the offset between the outer and inner hollow cylindrical bodies 316, 317 the connection elements 318a, 318b, 318c have non-constant radial extension, in particular increasing from 318a to 318c. In particular, three pairs of connection elements are provided, wherein the connection elements 318b of the second pair have a radial extension greater than that of the connection elements 318a of the first pair and the connection elements 318c of the third pair have a radial extension greater than that of the connection elements 318b of the second pair.

Between the outer and inner hollow cylindrical bodies 316, 317 and the connection elements 318a, 318b, 318c cavities C1, C2, C3, C4 with substantially trapezoidal cross section and having increasing radial extension are defined. In particular, there are defined a cavity C1 with reduced radial extension, a first pair of cavities C2 arranged adjacent at the two sides of the first cavity C1 and having a radial extension greater than that of the first cavity C1, a second pair of cavities C3, arranged adjacent to a respective cavity C2 and having a radial extension greater than that of the first pair of cavities C2, and a further cavity C4 adjacent to the two cavities C3 and arranged in an opposite position, in particular diametrically opposite, with respect to the cavity C1 and having a radial extension greater than that of the second pair of cavities C3.

As the radial extension of the cavities C1-C4 increases, the elastic deformability of the portion 311 increases, which thus has a differentiated stiffness, not constant in the angular direction, namely not constant for all of the angular positions. In particular, in the support structure 310 described above in detail it is possible to identify a substantially rigid slice 312, at the cavity C1 with minimum radial extension, and an elastically deformable slice 313 at the cavities C2-C4 with gradually increasing radial extension.

Similarly to what was stated with reference to the embodiment of Figures 2-5, the connection elements 318 and consequently the cavities C1-C4 can differ in number from what is shown.

Although the support structure 310 has been shown and described as having a plane of symmetry, this is not strictly necessary.

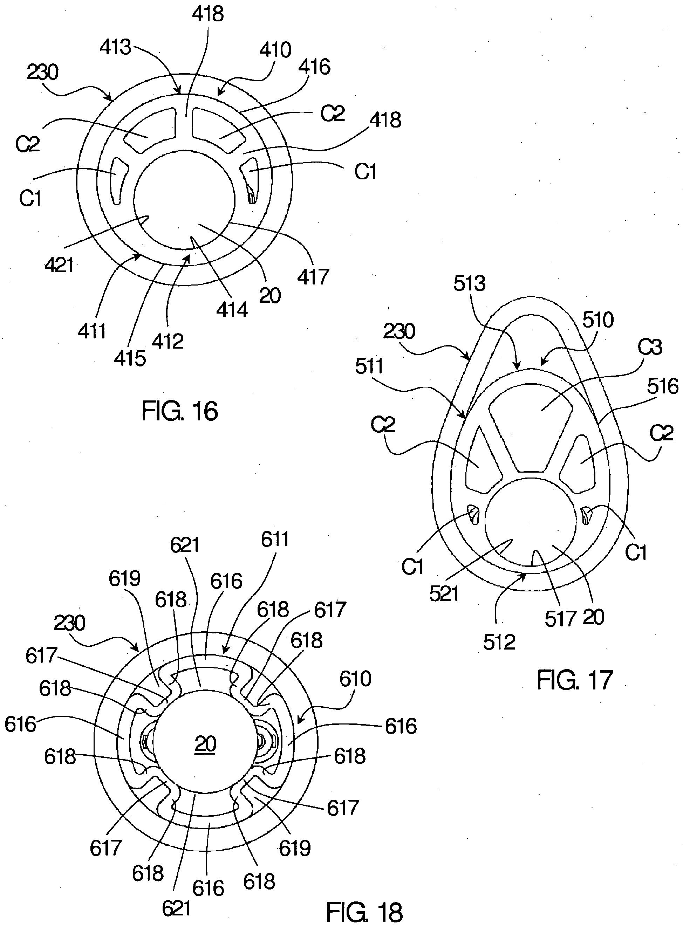

Moreover, although it has been illustrated and described that a cavity C4 is provided in a position opposite the substantially rigid slice 312, a connection element 318 could be provided in a position opposite the substantially rigid slice 312(cf. Figure 16). Moreover, it should be observed that the configuration shown is advantageous in that it opposes the region of maximum elastic deformability to the region of maximum stiffness. Furthermore, although it has been illustrated that the cavity C4 opposite the substantially rigid slice 312 has an angular extension smaller than the adjacent cavities C3, this is not strictly necessary and it could instead have the maximum angular extension, in this way further increasing the maximum deformability of the portion 311.

As shown in detail in Figures 11 and 12, the support structure 310 comprises, in a totally analogous way to the embodiment of Figures 6-8, a pin 330 housed in the inner hollow cylindrical body 317.

In this case, moreover, a screw 333 is shown for fixing the pin 330 to the portion 311 suitable for being screwed at the longitudinal end of the pin 330 - where an internal threading 330a is provided - opposite the longitudinal end 332 of the pin 330 configured to couple with matching fixing means 26 formed in the bicycle on-board device 20, in this case a hole provided with an internal threading.

The screw 333 embodies a head 333a of the pin 330, which abuts on a longitudinal end of the elastically deformable portion 311.

The screw 333 is preferably screwed into the pin 330 with the interposition of a washer 335.

Preferably, the washer 335 has an internal diameter greater than the external diameter of the pin 330. In this way, when the screw 333 is tightened in the pin 330, the washer 335 exerts a pressure in the longitudinal direction on the elastically deformable portion 311, thus causing a radial deformation thereof and therefore a better grip on the seat post 230.

In order to mount the bicycle on-board device 20 in the seat post 230, first of all the pin 330 is inserted inside the inner hollow cylindrical body 317 of the support structure 310 and blocked in position by the screw 333 and the washer 335. Then the threaded end 332 of the pin 330 is screwed to the bicycle on-board device 20. Finally, the support structure 310 - bicycle on-board device 20 assembly is inserted into the seat post 230. Alternatively, the mounting steps can be carried out in another order.

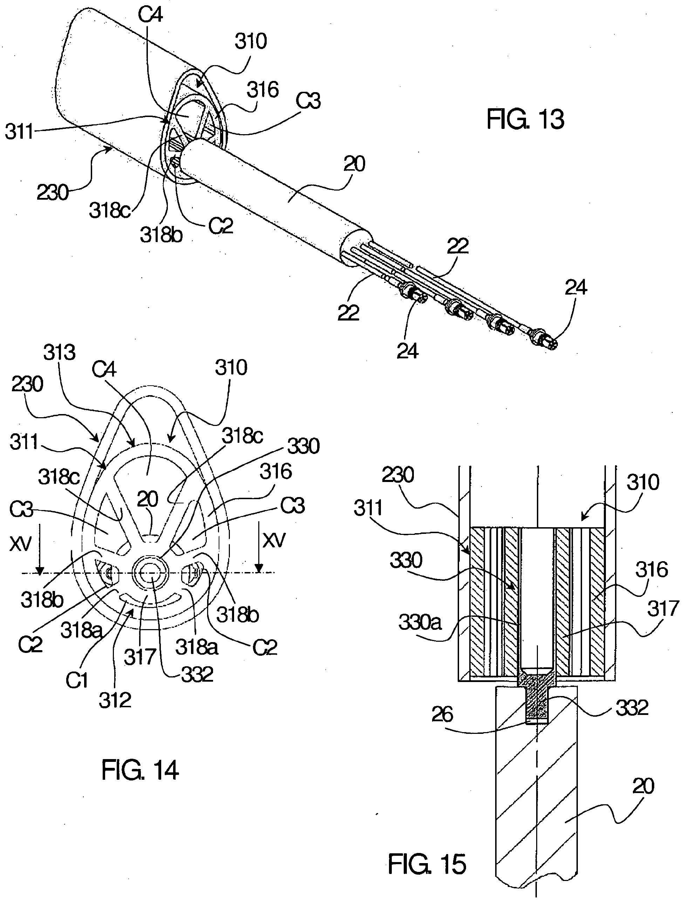

Figures 13 to 15 show the structure 310 described above and illustrated in Figures 9 to 12, inserted in a seat post 230 with non-circular cross section.

In Figures 13 to 15 it is clearly shown that, following the forced insertion of the structure 310 in the seat post 230, the elastically deformable slice 313 deforms so that the support structure 310 adapts to the non-circular section of the seat post 230. In particular, following forced insertion, the outer hollow cylindrical body 316 deforms thus taking up an oblong, ovoidal shape. Also in this case, due to the elastic return of the elastically deformable slice 313 following the forced insertion, the outer surface of the outer hollow cylindrical body 316 is in abutment against the inner wall of the seat post 230. This allows the support structure 310 - bicycle on-board device 20 assembly to be kept in position within the seat post 230, thus preventing any movement thereof either in the radial direction or in the axial direction.

Alternatively, the support structure 310 can be configured with the shape of Figures 13 to 15 and be deformed into the shape of Figures 9 to 12 when inserted in a cylindrical seat post.

Figures 16 to 18 show, as an example, alternative shapes of the portion configured to be inserted inside the seat post, suitable both for direct coupling with the bicycle on-board device 20 as shown, and for coupling with the bicycle on-board device 20 by means of a pin similarly to Figures 6 to 15.

Figure 16 shows a support structure 410 for a bicycle on-board device 20 according to another embodiment of the invention. The support structure 410 comprises a portion 411 configured to be inserted in the seat post 230. The portion 411 is substantially cylindrical and a seat 421, preferably with circular cross section, is formed inside it for housing the bicycle on-board device 20, the seat 412 being offset with respect to the longitudinal axis of the portion 411.

In the portion 411, between a continuous radially outer wall 416 and a continuous radially inner wall 417, a first pair of longitudinal cavities C1 and a second pair of longitudinal cavities C2, preferably with trapezoidal cross section, are provided. The cavities C2 of the second pair have a radial extension greater than that of the cavities C1 of the first pair. Moreover, the cavities of each pair of cavities C1, C2 are arranged symmetrically with respect to a plane extending longitudinally in the portion 411. In the portion 411 a substantially rigid slice 412 and an elastically deformable slice 413 are therefore defined, which have the same functions described above with reference to the other embodiments.

It should be noted that in this case, in a position opposite the position of maximum stiffness defined by the substantially rigid slice 412 there is a connection element 418 instead of a cavity.

It should also be noted that in this case, the substantially rigid slice 412 does not have cavities.

Figure 17 shows a support structure 510 for a bicycle on-board device 20 according to another embodiment of the invention, inserted in a seat post with non-cylindrical cross section.

The support structure 510 is totally similar to that described above and illustrated in Figure 16, from which it differs in that it comprises a different number of cavities with trapezoidal cross section formed in the portion 511 configured to be inserted in the seat post 230.

In particular, the support structure 510 has, between a radially outer continuous wall 516 and a radially inner continuous wall 517, a first pair of longitudinal cavities C1, a second pair of longitudinal cavities C2, and a third cavity C3, all preferably with trapezoidal cross section. The cavities C2 of the second pair have a radial extension greater than that of the cavities C1 of the first pair, and the cavity C3 has a radial extension greater than that of the cavities C2 of the second pair of cavities. Moreover, the cavities of each pair of cavities C1, C2 are arranged symmetrically with respect to a plane extending longitudinally in the portion 511.

Therefore, in the portion 511 a substantially rigid slice 512 and an elastically deformable slice 513 having the same functions described above with reference to the other embodiments are once again defined.

Such an embodiment illustrates how, thanks to the presence of the elastically deformable slice 513 having the configuration described above, the support structure 510 can be advantageously inserted also in seat posts 230 having a non-circular cross section.

Figure 18 shows a support structure 610 for a bicycle on-board device 20 according to another embodiment of the invention. The support structure 610 differs from the support structure 10 described above and illustrated in Figures 2 to 5 in that it does not have a comparatively rigid slice and a comparatively elastically deformable slice, rather the portion 611 configured to be inserted in the seat post 230 has a certain rotational symmetry. Under "rotational symmetry" it is meant to indicate that there is at least one rotation about a longitudinal axis that leaves the portion 611 unchanged.

In particular, the portion 611 comprises a plurality of radially outer portions 616, a plurality of radially inner portions 617, and connection elements 618 between such radially outer and inner portions 616, 617. Between successive radially outer portions 616, grooves 619 are thus defined. Unlike the support structure 10, the radially outer portions 616 all have the same circumferential extension, the radially inner portions 617 all have the same circumferential extension, and the connection elements 618 all have the same radial extension.

The radially inner portions 617 define a seat 621 suitable for receiving, in use, the bicycle on-board device 20. The radially outer portions 616 of the portion 611 abut, in use, against the inner surface of the seat post 230.

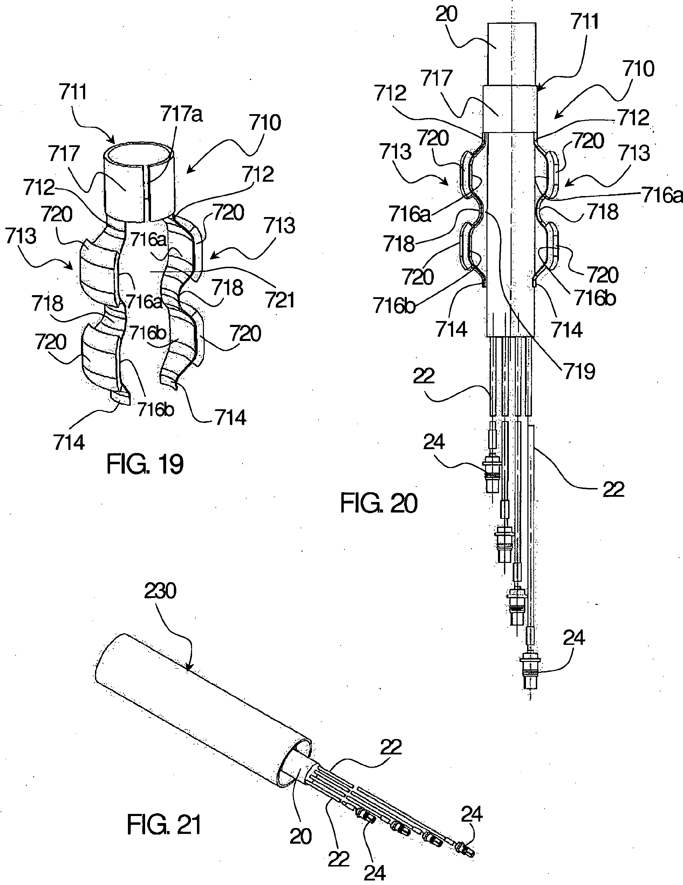

Figures 19 to 21 show a support structure 710 for a bicycle on-board device 20 according to another embodiment of the present invention. The support structure 710 comprises a substantially annular body 717 preferably open at a slit 717a, and a pair of strips 713 extending axially - or longitudinally -, preferably from diametrically opposite sides of the annular body 717.

The number of strips 713 could be greater than two or there could even be a single strip 713.

Each strip 713 comprises a first end 712 for anchoring to the annular body 717 and a second free end 714.

Each strip 713 is undulated and in particular two portions, or bulges, 716a, 716b projecting radially outwards and a radially inner portion 718 or recess or valley joining the two radially outer portions 716a, 716b develop between the two anchoring and free ends 712, 714 of each strip 713. It is also possible to provide a single radially outer portion or a greater number of radially outer and inner portions.

Preferably, at each bulge 716a, 716b a highly yielding element 720, typically a rubber pad or any other known component having a damping function is fixed, for example glued.

The annular body 717 forms a comparatively rigid region of the support structure 710, while the bulges 716b adjacent to the free end 714 form a comparatively elastically deformable region of the support structure 710, and the bulges 716a adjacent to the anchoring end 712 of the strips 713 form a region of intermediate stiffness between that of the annular body 717 and that of the bulges 716b adjacent to the free end 714 of the strips 713.

The annular body 717 and the constrained and free ends 712, 714 of the strips 713 also define a support seat 721 of the bicycle on-board device 20.

It should be noted that the bulges 716a, 716b and the radially inner joining portions 718 do not contribute to define the seat 721 since their radially inner surface is radially outer than the radially inner surface of the ends 712, 714. A cylindrical gap 719 is therefore created between the support structure 710 and the bicycle on-board device 20 along substantially the entire extension of the strips 713. The gap 719 allows better adaptation to the shape and/or size of the bicycle on-board device 20 and/or to the shape and/or size of the seat post 230. The gap 719 could however not be present.

Therefore, the support structure 710 comprises a portion configured to be inserted inside the seat post 230 - in particular the entire support structure 710 - which has a stiffness with respect to radial deformation that is not constant for all of the longitudinal positions, nor for all of the angular positions.

In order to mount the support structure 710 inside the seat post 230 of a bicycle 200, the user must first insert the bicycle on-board device 20 in the annular body 717 and between the strips 713. Then, the support structure 710 - bicycle on-board device 20 assembly is inserted in the seat post 230.

The bulges 716b, and to a lesser extent the bulges 716a, allow the support structure 710 to adapt, in use, to seat posts 230 of variable shapes and/or sizes, while the annular body 717 and the bulges 716a, in use, going in any case into resting and pushing relationship against the inner wall of the seat post 230, provide a predefined and stable position for the bicycle on-board device 20 even in the presence of vibrations.

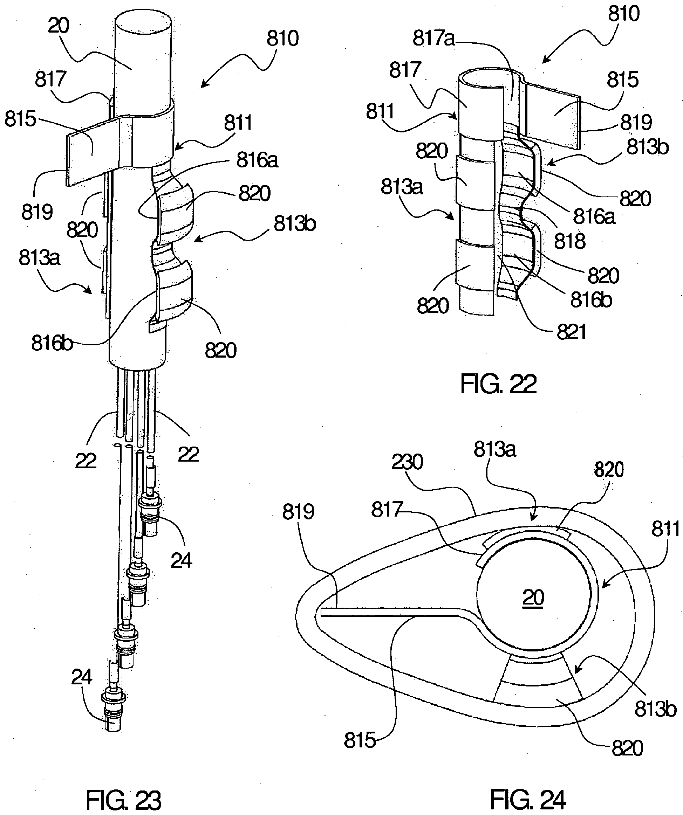

Figures 22 to 24 show a support structure 810 for a bicycle on-board device 20 according to another embodiment of the invention.

The support structure 810 differs from the one illustrated and described with reference to Figures 19 to 21 in that only one of the two strips, indicated with 813b, has the bulges 816a, 816b, while the strip 813a is not undulated and only has two rubber pads 820. Similar elements are indicated with the same reference numerals, increased by 100.

Therefore, the stiffness with respect to radial deformation of the support structure 810 takes on at least two different values both in two different angular positions - considered respectively on the two strips 813a, 813b - and in two different longitudinal positions - in particular three positions, considered respectively on the annular element 817, on the bulge 816a and on the bulge 816b - of the portion configured to be inserted inside the bicycle tube, in this particular case the entire support structure 810.

Moreover, the support structure 810 differs from the one illustrated and described with reference to Figures 19 to 21 in that a flap 815 extends radially from the substantially annular body 817.

Preferably, the substantially annular body 817 and the flap 815 are made as one piece, in other words the flap 815 extends from an end of the slit 817a of the substantially annular body 817.

The flap 815 has an anti-rotation function of the support structure 810 inside the seat post 230. In particular, as shown in Figure 24, a free end 819 of the flap 815 abuts on the inner surface of the seat post 230 at the area of minimum radius of curvature of the seat post 230.

The mounting of the support structure 810 is analogous to that of the support structure 710 of Figures 19 to 21, apart for the fact that the flap 815 is cut to the size of the seat post 230.

Such a flap 815 can also be present in the support structure 710 of Figures 19 to 21.

Figures 25 and 26 show a support structure 910 for a bicycle on-board device 20 according to another embodiment of the invention. The support structure 910 is totally similar to the support structure 10 described above and illustrated in Figures 2 to 5, and thus has a portion 911 configured to be inserted at least partially and preferably completely inside the seat post 230.

The portion 911 comprises a substantially rigid slice 912 and an elastically deformable slice 913.

The portion 911 is identical to the portion 11 and its elements are indicated with the same reference numerals, increased by 900.

A layer 930 of adhesive material, for example glue, is provided between an inner surface of the seat post 230 and the surfaces of the portion 911 suitable for abutting, in use, thereagainst, namely the radially outer surface 915 of the substantially rigid slice 912 and the radially outer surface of the radially outer portions 916a, 916b, 916c of the elastically deformable slice 913.

As shown, alternatively and/or in addition, a further layer 932 of adhesive material, for example glue, is provided between the bicycle on-board device 20 and the surfaces of the portion 911 defining the seat 921 suitable for receiving, in use, the bicycle on-board device 20, namely the radially inner surface 914 of the substantially rigid slice 912 and the radially inner surface of the radially inner portions 917a, 917b of the elastically deformable slice 913.

A layer of glue analogous to the layer of glue 930, 932 can be provided in other embodiments of the invention.

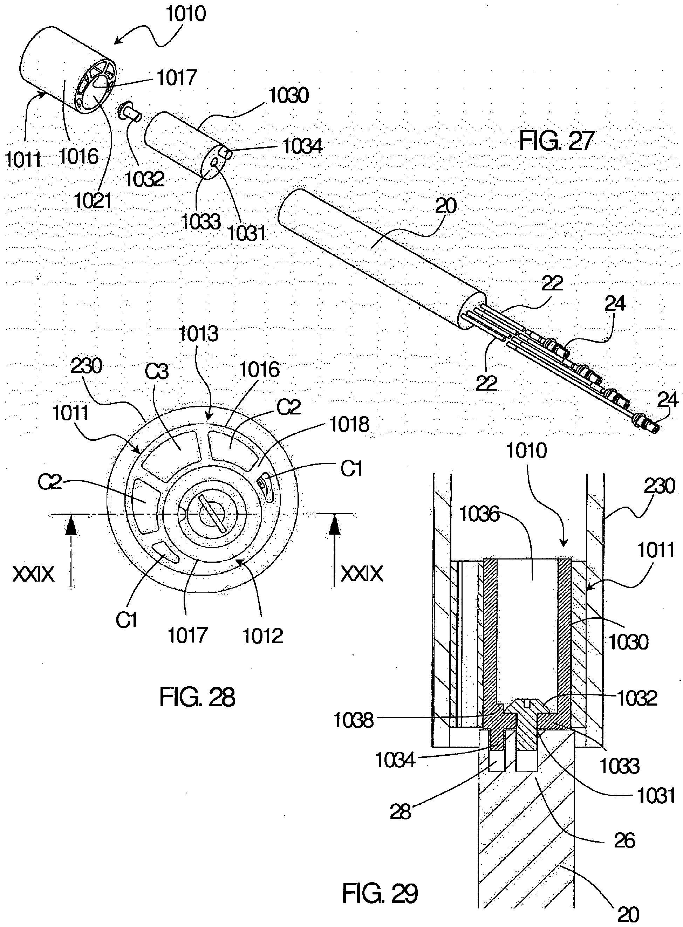

Figures 27 to 29 show a support structure 1010 for a bicycle on-board device 20 according to another embodiment of the invention.

The support structure 1010 also comprises an elastically deformable portion 1011 configured to be at least partially inserted in a forced manner in the seat post 230.

In particular, the portion 1011 of the support structure 1010 is similar to that of the support structure 510 of Figure 17, from which it differs in that it has a cylindrical cross section. The portion 1011 thus has, between a continuous radially outer wall 1016 and a continuous radially inner wall 1017, an odd number (five) of cavities C1, C2, C3, and therefore a cavity C3 is provided in a position opposite the substantially rigid slice 1012 - which has no cavities.

Like the embodiments of Figures 6 to 8 and of Figures 9 to 12, moreover, there is no seat for the bicycle on-board device 20 formed directly in the portion 1011, rather the support structure 1010 of Figures 27 to 29 also comprises a pin 1030 housed in the portion 1011 configured to be inserted inside the seat post 230, in a seat 1021.

In this case, the pin 1030 is hollow, but provided with a bottom 1033 at a first longitudinal end, said bottom 1033 being provided with a hole 1031 for the passage of a screw 1032 intended for screwing into a threaded hole 26 of the bicycle on-board device 20.

The screw 1032 and the threaded hole 26 could be replaced by different removable mechanical fixing means for the bicycle on-board device 20.

The support structure 1010 further comprises an anti-rotation device for the bicycle on-board device 20, which could nevertheless be absent.

The anti-rotation device comprises a peg 1034 projecting from the bottom 1033 at the first end of the pin 1030, said peg 1034 being configured to be housed in a seat 28 of the bicycle on-board device 20.

At the peg 1034, the bottom 1033 of the pin 1030 can have an increased thickness 1038 inside the longitudinal cavity 1036 of the pin 1030 to provide for greater strength.

The pin 1030 is blocked in position inside the portion 1011 of the support structure 1010 in a suitable manner, for example by gluing or forcing.

In order to mount the bicycle on-board device 20 in the seat post 230, first the bicycle on-board device 20 is abutted on the portion 1011 of the support structure 1010 in a mutual angular position such that the peg 1034 is housed in the seat 28 of the bicycle on-board device 20.

Then the screw 1032 is inserted into the longitudinal cavity 1036 of the pin 1030, it is passed into the hole 1031 of the bottom 1033 and it is screwed into the threaded hole 26 of the bicycle on-board device 20.

Finally, the support structure 1010 - bicycle on-board device 20 assembly is inserted into the seat post 230.

Alternatively, the mounting steps can be carried out in another order.

Of course, a coupling between the bicycle on-board device 20 and the support structure analogous to that described above can be provided in association with a different portion 1011 from the one shown in Figures 27 to 29.

An anti-rotation device analogous to the one described above can be provided in any of the support structures described above.

It is manifest that the support structure for a bicycle on-board device thus conceived can undergo several changes and variants, all of which are encompassed by the invention; moreover, all of the details can be replaced by technically equivalent elements. In practice, the materials used, as well as the sizes, can be whatever according to the technical requirements.

Those skilled in the art will realise in particular that features of two or more described embodiments can be combined into a single embodiment, and features of one or more described embodiments can be used in other embodiments, even if not explicitly described above.

## Claims

1. A support structure (10, 110, 310, 410, 510, 910, 1010) of a bicycle on-board device (20) inside a bicycle tube (230), the support structure (10, 110, 310, 410, 510, 910, 1010) comprising means (21, 132, 332, 421, 521, 721, 821, 921, 1032) for supporting the bicycle on-board device (20), and a portion (11, 111, 311, 411, 511, 911, 1011) configured to be inserted inside the bicycle tube (230), said portion (11, 111, 311, 411, 511, 911, 1011) configured to be inserted inside the bicycle tube (230) having a stiffness with respect to radial deformation that is not constant for all of the angular positions and/or for all of the longitudinal positions, and said portion (11, 111, 311, 411, 511, 711, 811, 911) configured to be inserted inside the bicycle tube (230) having a comparatively rigid slice (12, 112, 312, 412, 512, 912, 1012) and a comparatively elastically deformable slice (13, 113, 313, 413, 513, 913, 1013),
**characterized in that**
the substantially rigid slice (12, 112, 312, 412, 512, 912, 1012) comprises a radially outer surface (15, 115, 915), which abuts, in use, against an inner surface of the bicycle tube (230), and a radially inner surface (14, 114, 914), against which, in use, the bicycle on-board device (20) or a pin (130, 330, 1030) abuts, the pin having, at one end, mechanical fixing means (132, 332, 1032), preferably removable, for the bicycle on-board device (20).

2. Support structure (10, 110, 310, 410, 510, 910, 1010) according to claim 1, wherein the elastically deformable slice (13, 113, 313, 413, 513, 913, 1013) comprises a continuous or discontinuous radially outer wall (16a, 16b, 16c, 116a, 116b, 116c, 316, 416, 516, 916a, 916b, 916c, 1016), a continuous or discontinuous radially inner wall (17a, 17b, 117a, 117b, 317, 417, 517, 917a, 917b, 1017), and connection elements (18a, 18b, 18c, 18d, 118a, 118b, 118c, 118d, 318a, 318b, 318c, 418, 518, 918a, 918b, 918c, 918d, 1018) therebetween.

3. Support structure (10, 110, 310, 410, 510, 910, 1010) according to claim 2, wherein the connection elements (18a, 18b, 18c, 18d, 118a, 118b, 118c, 118d, 318a, 318b, 318c, 418, 518, 918a, 918b, 918c, 918d, 1018) have an increasing radial extension moving away in the two directions from the substantially rigid slice (12, 112, 312, 412, 512, 912, 1012), to converge in a position opposite thereto.

4. Support structure (10, 110, 410, 510, 910, 1010) according to claim 2 or 3, wherein the connection elements (18a, 18b, 18c, 18d, 118a, 118b, 118c, 118d, 418, 518, 918a, 918b, 918c, 918d, 1018) are spaced apart so as to form radially outer wall portions (16a, 16b, 16c, 116a, 116b, 116c, 916a, 916b, 916c), or cavities (C1, C2, C3, C4) between the radially outer continuous wall (416, 516, 1016) and the radially inner continuous wall (417, 517, 1017), that have an increasing angular extension going away in the two directions from the substantially rigid slice (12, 112, 412, 512, 912, 1012), to converge in a position opposite thereto.

5. A support structure (710, 810) of a bicycle on-board device (20) inside a bicycle tube (230), the support structure (710, 810) comprising means (721, 821) for supporting the bicycle on-board device (20), and a portion (711, 811) configured to be inserted inside the bicycle tube (230), said portion (711, 811) configured to be inserted inside the bicycle tube (230) having a stiffness with respect to radial deformation that is not constant for all of the angular positions and/or for all of the longitudinal positions,
**characterized in that**
the portion (711, 811) configured to be inserted inside the bicycle tube (230) has a substantially annular body (717, 817) and at least one strip (713, 813a, 813b) extending longitudinally from said annular body (717, 718).

6. Support structure (710, 810) according to claim 5, wherein said at least one strip or at least one of said strips (713, 813b) has at least one portion (716a, 716b, 816a, 816b) projecting radially outwards.

7. Support structure (710, 810) according to claim 6, wherein said at least one strip or at least one of said strips (713, 813b) has at least two portions (716a, 716b, 816a, 816b) projecting radially outwards and at least one radially inner joining portion (718, 818) between two adjacent radially outer portions (716a, 716b, 816a, 816b).

8. Support structure (710, 810) according to any of claims 5-7, wherein each strip (713, 813a, 813b) carries at least one highly yielding element (720, 820).

9. Support structure (810) according to any of claims 5-8, wherein a flap (815) extends radially from the substantially annular body (717, 817).

10. Support structure (910) according to any of claims 1-9, wherein the portion (11, 111, 311, 411, 511, 711, 811, 911, 1011) configured to be inserted inside the bicycle tube (230) has a layer (930, 932) of adhesive material on a surface suitable for abutting, in use, against an inner surface of the bicycle tube (230) and/or at a surface defining a seat (921) suitable for receiving, in use, the bicycle on-board device (20).

11. Support structure (910) according to any of claims 1-10, wherein the portion (11, 111, 311, 411, 511, 711, 811, 911, 1011) configured to be inserted inside the bicycle tube (230) has a surface suitable for abutting, in use, against an inner surface of the bicycle tube (230) and/or a surface defining a seat (921) suitable for receiving, in use, the bicycle on-board device (20) that is corrugated, knurled, grooved or textured in another way.

12. Support structure (10, 410, 510, 910) according to any of claims 1-11, wherein said means for supporting the bicycle on-board device (20) comprise a seat (21, 421, 521, 921) formed in the portion (11, 411, 511, 911) configured to be inserted inside the bicycle tube (230).

13. Support structure (110, 310, 1010) according to any of claims 1-11, comprising a pin (130, 330, 1030) having, at a first longitudinal end, said means (132, 332, 1032) for supporting the bicycle on-board device (20), the pin (130, 330, 1030) extending longitudinally in a seat formed in the elastically deformable portion (111, 311, 1011).

## Patentansprüche

1. Tragestruktur (10, 110, 310, 410, 510, 910, 1010) für eine integrierte Vorrichtung (20) eines Fahrrades im Inneren eines Fahrradrohrs (230), wobei die Tragestruktur (10, 110, 310, 410, 510, 910, 1010) Einrichtungen (21, 132, 332, 421, 521, 721, 821, 921, 1032), mit denen die integrierte Vorrichtung (20) des Fahrrades getragen wird, sowie einen Abschnitt (11, 111, 311, 411, 511, 911, 1011) umfasst, der zum Einführen in das Innere des Fahrradrohrs (230) eingerichtet ist, der zum Einführen in das Innere des Fahrradrohrs (230) eingerichtete Abschnitt (11, 111, 311, 411, 511, 911, 1011) eine Steifigkeit in Bezug auf radiale Verformung hat, die nicht für alle der Winkelpositionen und/oder für alle der Positionen in Längsrichtung konstant ist, und der zum Einführen in das Innere des Fahrradrohrs (32) eingerichtete Abschnitt (11, 111, 311, 411, 511, 911, 1011) einen vergleichsweise starren Teil (12, 112, 312, 412, 512, 912, 1012) sowie einen vergleichsweise elastisch verformbaren Teil (13, 113, 313, 413, 513, 913, 1013) hat,
**dadurch gekennzeichnet, dass**
der vergleichsweise starre Teil (12, 112, 312, 412, 512, 912, 1012) eine radial außen liegende Fläche (15, 115, 915), die in Funktion an einer Innenfläche des Fahrradrohrs (230) anliegt, sowie eine radial innen liegende Fläche (14, 114, 914) umfasst, an der in Funktion die integrierte Vorrichtung (20) des Fahrrades oder ein Bolzen (130, 330, 1030) anliegt, wobei der Bolzen an einem Ende eine mechanische Befestigungseinrichtung (132, 332, 1032) für die integrierte Vorrichtung (20) des Fahrrades aufweist, die vorzugsweise entfernt werden kann.

2. Tragestruktur (10, 110, 310, 410, 510, 910, 1010) nach Anspruch 1, wobei der elastisch verformbare Teil (13, 113, 313, 413, 513, 913, 1013) eine durchgehende oder unterbrochene radial außen liegende Wand (16a, 16b, 16c, 116a, 116b, 116c, 316, 416, 516, 916a, 916b, 916c, 1016), eine durchgehende oder unterbrochene radial innen liegende Wand (17a, 17b, 117a, 117b, 317, 417, 517, 917a, 917b, 1017) sowie Verbindungselemente (18a, 18b, 18c, 18d, 118a, 118b, 118c, 118d, 318a, 318b, 318c, 418, 518, 918a, 918b, 918c, 918d, 1018) zwischen ihnen umfasst.

3. Tragestruktur (10, 110, 310, 410, 510, 910, 1010) nach Anspruch 2, wobei die Verbindungselemente (18a, 18b, 18c, 18d, 118a, 118b, 118c, 118d, 318a, 318b, 318c, 418, 518, 918a, 918b, 918c, 918d, 1018) eine zunehmende radiale Ausdehnung in den zwei Richtungen von dem im Wesentlichen starren Teil (12, 112, 312, 412, 512, 912, 1012) weg haben und an einer diesem gegenüberliegenden Position zusammenlaufen.

4. Tragestruktur (10, 110, 310, 410, 510, 910, 1010) nach Anspruch 2 oder 3, wobei die Verbindungselemente (18a, 18b, 18c, 18d, 118a, 118b, 118c, 118d, 318a, 318b, 318c, 418, 518, 918a, 918b, 918c, 918d, 1018) so beabstandet sind, dass radial außen liegende Wandabschnitte (16a, 16b, 16c, 116a, 116b, 116c, 916a, 916b, 916c) oder Hohlräume (C1, C2, C3, C4) zwischen der radial außen liegenden durchgehenden Wand (416, 516, 1016) und der radial innen liegenden durchgehenden Wand (417, 517, 1017) gebildet werden, die in den zwei Richtungen von dem im Wesentlichen starren Teil (12, 112, 312, 412, 512, 912, 1012) weg haben und an einer diesem gegenüberliegenden Position zusammenlaufen.

5. Tragestruktur (710, 810) für eine integrierte Vorrichtung (20) eines Fahrrades im Inneren eines Fahrradrohrs (230), wobei die Tragestruktur (710, 810) Einrichtungen (721, 821), mit denen die integrierte Vorrichtung (20) des Fahrrades getragen wird, sowie einen Abschnitt (711, 811) umfasst, der zum Einführen in das Innere des Fahrradrohrs (230) eingerichtet ist, der zum Einführen in das Innere des Fahrradrohrs (230) eingerichtete Abschnitt (711, 811) eine Steifigkeit in Bezug auf radiale Verformung hat, die nicht für alle der Winkelpositionen und/oder für alle der Positionen in Längsrichtung konstant ist,
**dadurch gekennzeichnet, dass**
der zum Einführen in das Innere des Fahrradrohrs (230) eingerichtete Abschnitt (711, 811) einen im Wesentlichen ringförmigen Körper (717, 817) sowie wenigstens einen Streifen (713, 813a, 813b) hat, der sich in Längsrichtung von dem ringförmigen Körper (717, 718) aus erstreckt.

6. Tragestruktur (710, 810) nach Anspruch 5, wobei der wenigstens eine Streifen oder wenigstens einer der Streifen (713, 813b) wenigstens einen Abschnitt (716a, 716b, 816a, 816b) aufweist, der radial nach außen vorsteht.

7. Tragestruktur (710, 810) nach Anspruch 6, wobei der wenigstens eine Streifen oder wenigstens einer der Streifen (713, 813b) wenigstens zwei Abschnitte (716a, 716b, 816a, 816b), die radial nach außen vorstehen, sowie wenigstens einen radial innen liegenden Verbindungsabschnitt (718, 818) zwischen zwei aneinandergrenzenden radial außen liegenden Abschnitten (716a, 716b, 816a, 816b) aufweist.

8. Tragestruktur (710, 810) nach einem der Ansprüche 5-7, wobei jeder Streifen (713, 813a, 813b) wenigstens ein stark nachgebendes Element (720, 820) trägt.

9. Tragestruktur (810) nach einem der Ansprüche 5-8, wobei sich eine Lasche (815) radial von dem im Wesentlichen ringförmigen Körper (717, 817) aus erstreckt.

10. Tragestruktur (910) nach einem der Ansprüche 1-9, wobei der zum Einführen in das Innere des Fahrradrohrs (230) eingerichtete Abschnitt (11, 111, 311, 411, 511, 911, 1011) eine Schicht (930, 932) aus klebendem Material an einer Fläche, die sich dazu eignet, in Funktion an einer Innenfläche des Fahrradrohrs (230) anzuliegen, und/oder an einer Fläche aufweist, die eine Aufnahme (921) bildet, die sich dazu eignet, in Funktion die integrierte Vorrichtung (20) des Fahrrades aufzunehmen.

11. Tragestruktur (910) nach einem der Ansprüche 1-10, wobei der zum Einführen in das Innere des Fahrradrohrs (230) eingerichtete Abschnitt (11, 111, 311, 411, 511, 911, 1011) eine Fläche, die sich dazu eignet, in Funktion an einer Innenfläche des Fahrradrohrs (230) anzuliegen, und/oder eine Fläche aufweist, die eine Aufnahme (921) bildet, die sich dazu eignet, in Funktion die integrierte Vorrichtung (20) des Fahrrades aufzunehmen, und die gewellt, gerändelt, gerillt oder auf andere Weise strukturiert ist.

12. Tragestruktur (10, 410, 510, 910) nach einem der Ansprüche 1-11, wobei die Einrichtung zum Tragen der integrierten Vorrichtung (20) des Fahrrades eine Aufnahme (21, 421, 521, 921) umfasst, die in dem zum Einführen in das Innere des Fahrradrohrs (230) eingerichteten Abschnitt (11, 111, 311, 411, 511, 911) ausgebildet ist.

13. Tragestruktur (110, 310, 1010) nach einem der Ansprüche 1-11, die einen Bolzen (130, 330, 1030) umfasst, der an einem ersten Ende in Längsrichtung die Einrichtung (132, 332, 1032) aufweist, mit der die integrierte Vorrichtung (20) des Fahrrades getragen wird, wobei sich der Bolzen (130, 330, 1030) in Längsrichtung in einer in dem elastisch verformbaren Abschnitt (111, 311, 1011) ausgebildeten Aufnahme erstreckt.

## Revendications

1. Structure de support (10, 110, 310, 410, 510, 910, 1010) d'un dispositif embarqué de bicyclette (20) à l'intérieur d'un tube de bicyclette (230), la structure de support (10, 110, 310, 410, 510, 910, 1010) comprenant un moyen (21, 132, 332, 421, 521, 721, 821, 921, 1032) destiné à supporter le dispositif embarqué de bicyclette (20), et une partie (11, 111, 311, 411, 511, 911, 1011) configurée pour être insérée à l'intérieur du tube de bicyclette (230), ladite partie (11, 111, 311, 411, 511, 911, 1011) configurée pour être insérée à l'intérieur du tube de bicyclette (230) ayant une rigidité par rapport à une déformation radiale qui n'est pas constante pour la totalité des positions angulaires et/ou pour la totalité des positions longitudinales, et ladite partie (11, 111, 311, 411, 511, 711, 811, 911) configurée pour être insérée à l'intérieur du tube de bicyclette (230) ayant une tranche comparativement rigide (12, 112, 312, 412, 512, 912, 1012) et une tranche comparativement déformable de manière élastique (13, 113, 313, 413, 513, 913, 1013),
**caractérisée en ce que**
la tranche substantiellement rigide (12, 112, 312, 412, 512, 912, 1012) comprend une surface radialement extérieure (15, 115,915), qui est en butée, en utilisation, contre une surface intérieure du tube de bicyclette (230), et une surface radialement intérieure (14, 114, 914), contre laquelle, en utilisation, le dispositif embarqué de bicyclette (20) ou une broche (130, 330, 1030) est en butée, la broche ayant, à une extrémité, un moyen de fixation mécanique (132, 332, 1032), de préférence amovible, pour le dispositif embarqué de bicyclette (20).

2. Structure de support (10, 110, 310, 410, 510, 910, 1010) selon la revendication 1, dans laquelle la tranche déformable de manière élastique (13, 113, 313, 413, 513, 913, 1013) comprend une paroi radialement extérieure continue ou discontinue (16a, 16b, 16c, 116a, 116b, 116c, 316, 416, 516, 916a, 916b, 916c, 1016), une paroi radialement intérieure continue ou discontinue (17a, 17b, 117a, 117b, 317, 417, 517, 917a, 917b, 1017), et des éléments de connexion (18a, 18b, 18c, 18d, 118a, 118b, 118c, 118d, 318a, 318b, 318c, 418, 518, 918a, 918b, 918c, 918d, 1018) entre elles.

3. Structure de support (10, 110, 310, 410, 510, 910, 1010) selon la revendication 2, dans laquelle les éléments de connexion (18a, 18b, 18c, 18d, 118a, 118b, 118c, 118d, 318a, 318b, 318c, 418, 518, 918a, 918b, 918c, 918d, 1018) ont une extension radiale croissante en s'écartant dans les deux directions à partir de la tranche substantiellement rigide (12, 112, 312, 412, 512, 912, 1012), pour converger dans une direction opposée.

4. Structure de support (10, 110, 310, 410, 510, 910, 1010) selon la revendication 2 ou 3, dans laquelle les éléments de connexion (18a, 18b, 18c, 18d, 118a, 118b, 118c, 118d, 418, 518, 918a, 918b, 918c, 918d, 1018) sont écartés de manière à former des parties de parois radialement extérieures (16a, 16b, 16c, 116a, 116b, 116c, 916a, 916b, 916c), ou des cavités (C1, C2, C3, C4) entre la paroi continue radialement extérieure (416, 516, 1016) et la paroi continue radialement intérieure (417, 517, 1017), qui ont une extension angulaire croissante en s'écartant dans les deux directions par rapport à la tranche substantiellement rigide (12, 112, 412, 512, 912, 1012), pour converger dans une position opposée.

5. Structure de support (710, 810) d'un dispositif embarqué de bicyclette (20) à l'intérieur d'un tube de bicyclette (230), la structure de support (710, 810) comprenant un moyen (721, 821) pour supporter le dispositif embarqué de bicyclette (20), et une partie (711, 811) configurée pour être insérée à l'intérieur du tube de bicyclette (230), ladite partie (711, 811) configurée pour être insérée à l'intérieur du tube de bicyclette (230) ayant une rigidité par rapport à une déformation radiale qui n'est pas constante pour la totalité des positions angulaires et/ou pour la totalité des positions longitudinales,
**caractérisée en ce que**
la partie (711, 811) configurée pour être insérée à l'intérieur du tube de bicyclette (230) a un corps substantiellement annulaire (717, 817) et au moins une bande (713, 813a, 813b) s'étendant longitudinalement à partir dudit corps annulaire (717, 718).

6. Structure de support (710, 810) selon la revendication 5, dans laquelle ladite au moins une bande ou au moins une desdites bandes (713, 813b) a au moins une partie (716a, 716b, 816a, 816b) dépassant radialement vers l'extérieur.

7. Structure de support (710, 810) selon la revendication 6, dans laquelle ladite au moins une bande ou au moins une desdites bandes (713, 813b) a au moins deux parties (716a, 716b, 816a, 816b) dépassant radialement vers l'extérieur et au moins une partie de jonction radialement intérieure (718, 818) entre deux parties radialement extérieures (716a, 716b, 816a, 816b) adjacentes.

8. Structure de support (710, 810) selon l'une quelconque des revendications 5 à 7, dans laquelle chaque bande (713, 813a, 813b) supporte au moins un élément à souplesse élevée.

9. Structure de support (810) selon l'une quelconque des revendications 5 à 8, dans laquelle un volet (815) s'étend radialement à partir du corps substantiellement annulaire (717, 817).

10. Structure de support (910) selon l'une quelconque des revendications 1 à 9, dans laquelle la partie (11, 111, 311, 411, 511, 711, 811, 911, 1011) configurée pour être insérée à l'intérieur du tube de bicyclette (230) a une couche (930, 932) d'un matériau adhésif sur une surface appropriée pour être en butée, en utilisation, contre une surface intérieure du tube de bicyclette (230) et/ou au niveau d'une surface définissant un logement (921) approprié pour recevoir, en utilisation, le dispositif embarqué de bicyclette (20).

11. Structure de support (910) selon l'une quelconque des revendications 1 à 10, dans laquelle la partie (11, 111, 311, 411, 511, 711, 811, 911, 1011) configurée pour être insérée à l'intérieur du tube de bicyclette (230) a une surface appropriée pour être en butée, en utilisation, contre une surface intérieure du tube de bicyclette (230) et/ou une surface définissant un logement (921) approprié pour recevoir, en utilisation, le dispositif embarqué de bicyclette (20) qui est ondulée, moletée, rainurée ou texturée d'une autre manière.

12. Structure de support (10, 410, 510, 910) selon l'une quelconque des revendications 1 à 11, dans laquelle ledit moyen pour supporter le dispositif embarqué de bicyclette (20) comprend un logement (21, 421, 521, 921) formé dans la partie (11,411, 511, 911) configurée pour être insérée à l'intérieur du tube de bicyclette (230).

13. Structure de support (110, 310, 1010) selon l'une quelconque des revendications 1 à 11, comprenant une broche (130, 330, 1030) ayant, au niveau d'une première extrémité longitudinale, ledit moyen (132, 332, 1032) pour supporter le dispositif embarqué de bicyclette (20), la broche (130, 330, 1030) s'étendant longitudinalement dans un logement formé dans la partie déformable de manière élastique (111, 311, 1011).
